Europäisches Patentamt

European Patent Office

Office européen des brevets

(19)

(11) Numéro de publication: **0 300 847**
**A1**

(12) ## DEMANDE DE BREVET EUROPEEN

(21) Numéro de dépôt: **88401559.5**

(22) Date de dépôt: **21.06.88**

(51) Int. Cl.4: **C 09 J 3/14**
C 09 J 7/00, C 09 J 5/00

(30) Priorité: **06.07.87 FR 8709564**

(43) Date de publication de la demande:
**25.01.89 Bulletin 89/04**

(84) Etats contractants désignés:
**AT BE CH DE ES FR GB GR IT LI LU NL SE**

(71) Demandeur: **Borden, Inc.**
**180 East Broad Street**
**Columbus Ohio 43215 (US)**

(72) Inventeur: **Vettier Michel**
**29, allée de l'Epervière**
**F-26000 Valence (FR)**

**Carruel André**
**F-38590 Saint Etienne de St Geoirs (FR)**

(74) Mandataire: **Netter, André et al**
**Cabinet NETTER 40, rue Vignon**
**F-75009 Paris (FR)**

(54) **Adhésif à deux composants et procédé d'assemblage utilisant un tel adhésif.**

(57) Adhésif à deux composants dont la mise en contact provoque la formation d'un polymère réticulé ayant des propriétés adhésives. Selon l'invention, les composants sont sous forme de feuilles minces adhésives sensibles à la pression.

Pour effectuer un assemblage, on réalise un empilement comprenant successivement l'une des pièces à assembler (1), une feuille de chacun des composants (3, 4) et la seconde pièce à assembler (2).

FIG 2

## Description

### Adhésif à deux composants et procédé d'assemblage utilisant un tel adhésif

L'invention concerne un adhésif à deux composants et un procédé d'assemblage par collage utilisant un tel adhésif.

Les adhésifs à deux composants sont bien connus. Les deux composants sont habituellement des liquides visqueux ou des pâtes. L'un d'eux contient au moins un monomère ou un prépolymère (c'est-à-dire un polymère à faible degré de polymérisation lui-même polymérisable) et l'autre contient un réactif qui, lors de la mise en contact des deux composants, réagit avec le monomère ou le prépolymère pour former un polymère réticulé ayant des propriétés adhésives. Les deux composants peuvent être mélangés avant application, ou appliqués respectivement sur deux éléments à assembler par collage, la mise en contact intervenant alors au moment de l'assemblage. La formation du polymère in situ confère à ces adhésifs des qualités que ne possèdent pas les adhésifs à un seul composant.

Les adhésifs à deux composants connus présentent de multiples inconvénients. Leur application nécessite des pinceaux, des raclettes ou d'autres instruments qui sont vite encrassés. Il est difficile d'éviter les bavures. Le poste de travail se salit rapidement. Si on ne nettoie pas avant durcissement le récipient dans lequel on a préparé le mé lange, il est souvent difficile ou même impossible de le récupérer. Enfin, ces adhésifs contiennent souvent des solvants d'odeur désagréable et nuisibles du point de vue de l'hygiène et de la sécurité.

Le but de l'invention est de remédier à ces inconvénients.

Ce but est atteint, selon l'invention, par un adhésif à deux composants, un premier composant contenant au moins un monomère ou un prépolymère et l'autre composant contenant un réactif qui, lors de la mise en contact des deux composants, réagit avec le monomère ou le prépolymère pour former un polymère réticulé ayant des propriétés adhésives, l'un au moins des deux composants étant sous forme d'une feuille mince adhésive, notamment un ruban adhésif, sensible à la pression.

Les feuilles minces adhésives, notamment les rubans adhésifs, sensibles à la pression sont également bien connues. Elles adhèrent à la plupart des matériaux par simple pression. Elles sont généralement conservées sur un support anti-adhérent dont elles doivent être détachées au moment de l'utilisation. Le support anti-adhérent peut être notamment une feuille de papier, de polyester ou de polyéthylène recouvert de silicone.

On voit immédiatement que cette présentation permet d'étendre sans difficulté, sur un élément à assembler, une couche uniforme d'un composant de l'adhésif, sans rencontrer aucun des inconvénients signalés à propos des adhésifs à deux composants connus. Le composant s'applique étroitement sur la surface à encoller et se maintient en position pendant la manipulation et pendant le durcissement de l'adhésif grâce à ses propriétés adhésives sensibles à la pression. Le rôle de ces dernières est alors terminé, le polymère réticulé procurant une liaison définitive beaucoup plus forte que celle qui était assurée par la feuille adhésive sensible à la pression.

Dans la plupart des cas, les deux composants de l'adhésif selon l'invention sont sous forme de feuilles minces adhésives sensibles à la pression. Cependant, dans certains cas, on peut prévoir qu'un seul des deux composants soit sous forme de feuille mince, l'autre étant sous forme d'une solution liquide applicable par exemple à l'état d'aérosol. On aura recours à une telle solution par exemple lorsque l'une des surfaces à encoller présente des propriétés anti-adhérentes excluant l'adhésion d'une feuille adhésive sensible à la pression, ou lorsque l'un des constituants du mélange à réaliser ne peut être incorporé à une feuille adhésive sensible à la pression.

Pour que le monomère et le réactif de polymérisation puissent réagir en formant le polymère réticulé, ils doivent migrer à travers l'épaisseur de la feuille ou des feuilles pour se rencontrer mutuellement. A cet effet, l'épaisseur des feuilles adhésives sensibles à la pression est limitée à quelques centièmes de millimètre, de préférence moins d'un dixième de millimètre.

Comme connu dans la technique des feuilles adhésives sensibles à la pression, la feuille mince de l'adhésif selon l'invention comprend une matrice à base d'un polymère souple. C'est dans cette matrice qu'est dispersé le monomère ou le réactif de polymérisation. Le polymère souple est choisi de façon à pouvoir être mis en solution, en vue de la fabrication de la feuille, dans des solvants compatibles avec les autres ingrédients de celle-ci, la feuille étant réalisée par dépôt de la solution sur un support provisoire, par exemple un papier siliconé, et séchage. La feuille obtenue après séchage doit être stable, et ne pas manifester d'exsudation ou d'efflorescence pouvant résulter d'une insolubilité réciproque du polymère et des monomères ou autres produits introduits dans la composition.

Le polymère souple peut être par lui-même auto-adhésif pour procurer à la feuille le caractère adhésif. Il peut s'agir par exemple d'un polymère acrylique auto-adhésif tel que ceux commercialisés par National Starch sous la dénomination Durotak ou par UCB sous la dénomination Solucryl.

Alternativement, on peut utiliser un polymère souple non auto-adhésif et y ajouter, pour obtenir le caractère adhésif sensible à la pression, une résine collante, par exemple une résine à base de colophane modifiée telle que celles commercialisées par Hercules sous les dénominations Hercolyn, Pentalyn, Staybelite et Floral ou une résine polyterpénique telle que celle commercialisée par D.R.T. sous la dénomination Dercolyte.

Le polymère souple est avantageusement un copolymère du butadiène ou de l'isoprène avec le nitrile acrylique (caoutchouc nitrile), comportant des groupes carboxyliques, tel que ceux commercialisés par Goodrich sous la dénomination Hycar, qui confère à la feuille une bonne cohésion.

On peut également utiliser des polybutadiènes, des polyisoprènes, des copolymères butadiène-styrène, des polychloroprènes, des polyéthylènes chlorés ou chlorosulfonés, ainsi que des grades solubles de polymères souples du type polyester, polyester-amide et polyuréthanne.

Deux structures moléculaires peuvent convenir pour le polymère souple : une structure amorphe associée à un poids moléculaire élevé (par exemple Hycar 4021 ou 4051), et une structure en réseau tridimensionnel obtenue par formation du polymère in situ ou par réticulation après séchage (par exemple Hycar 1072).

La cohésion dans la matrice peut être encore renforcée en enduisant à l'aide des constituants un support poreux tel qu'un non-tissé à base de cellulose par exemple.

Le monomère destiné à la polymérisation peut être un composé comportant au moins une double liaison, par exemple un com posé acrylique, méthacrylique, vinylique ou diénique conjugué. A titre d'exemple de ces composés, on peut citer le diacrylate de tétraéthylèneglycol (TEGDA), le diméthacrylate de tétraéthylèneglycol (TEGDM), le triacrylate de triméthylolpropane (TMPTA), le triacrylate de pentaérythritol (PETA), l'acrylate de butyle, l'acrylate d'éthyl-2-hexyle et le phtalate d'allyle. On peut également utiliser un prépolymère tel que le produit commercialisé par Ancomer sous la dénomination Actocryl 401.

Pour obtenir lors de la polymérisation un réseau tridimensionnel, il convient d'utiliser un monomère présentant plus de deux doubles liaisons, ou un mélange de monomères comportant au moins 10% environ de molécules d'un tel monomère ou de tels monomères.

Pour éviter une évaporation au stockage, il est préférable d'éviter l'usage de monomères dont le point d'ébullition à la pression atmosphérique normale soit inférieur à 170°C.

Comme connu, on peut utiliser comme réactif de polymérisation des catalyseurs du type peroxyde ou du type hydroperoxyde, par exemple le peroxyde de benzoyle, le peroxyde de dichlorobenzoyle, l'hydroperoxyde de cumène, l'hydroperoxyde de 2-méthylbutène, l'hydroperoxyde de tertiobutyle, qui fournissent un compromis satisfaisant entre la stabilité au stockage et la rapidité de polymérisation.

Pour obtenir avec ces catalyseurs une polymérisation à température ordinaire, il est généralement nécessaire d'ajouter un accélérateur, ce dernier étant présent dans le premier composant de l'adhésif avec le monomère, tandis que le catalyseur est présent dans le second composant.

Les accélérateurs du type amine, notamment la diméthylaniline, la N-N'-diméthylparatoluidine et la diéthylaniline, peuvent être employés avec les deux types de catalyseurs mentionnés.

Des accélérateurs à base de sels métalliques, notamment de vanadium, de cobalt, de manganèse, peuvent également être utilisés avec les hydroperoxydes. Des exemples de sels métalliques sont les naphténates, les octoates, les acétates, les acétylacétonates.

Des accélérateurs du type $\alpha$-aminoalcool obtenus par addition d'aldéhydes et d'amines peuvent par ailleurs provoquer la polymérisation en l'absence de peroxyde ou d'hydroperoxyde. Un tel accélérateur est alors présent dans le second composant de l'adhésif.

En plus des constituants ci-dessus, on peut incorporer à l'un et/ou à l'autre des composants des adjuvants de polymérisation qui améliorent encore la rapidité de la réaction, notamment la saccharine (sulfimide benzoïque), les sulfonanilides fluorés et divers autres imides : phtalimide, succinimide, ainsi que le formamide, la thiourée et 1'$\alpha\alpha'$ dipyridyle.

Les monomères du commerce contiennent habituellement des stabilisants. Si nécessaire, on peut ajouter de la 1-4-benzoquinone ou un autre antioxydant de façon à atteindre une proportion de $5 \times 10^{-4}$ à 0,2 partie de stabilisant dans 100 parties du composant contenant un polymère, les proportions les plus fortes étant utiles lorsque ce composant contient aussi des amines.

On peut enfin, si on le souhaite, ajouter des plastifiants et/ou des charges, par exemple de la fibre de verre, pour ajuster les propriétés mécaniques de l'un et/ou de l'autre des composants et/ou du joint de colle à réaliser.

On donne ci-après des indications relatives aux proportions pondérales des différents constituants.

Le premier composant sous forme de feuille contient 35 à 90 parties de polymères souples et 65 à 10 parties de monomè res et/ou prépolymères. Une proportion de polymères inférieure n'assurerait pas à la bande une cohésion suffisante, et une proportion de monomères inférieure à celle indiquée n'assurerait pas un collage efficace.

Pour l'assemblage de pièces rigides, notamment de pièces métalliques, la quantité de polymères ne doit pas être supérieure à 65 parties pour 35 parties de monomères.

Dans chaque composant, des charges peuvent être ajoutées dans la limite de 40 parties pour 100 parties de polymères, l'ensemble charges + plastifiants + résines collantes n'excédant pas 50 parties pour 100 parties de polymères.

Le catalyseur du type peroxyde ou du type hydroperoxyde est mis en oeuvre à raison de 2 à 20 parties, et de préférence 4 à 10 parties, pour 100 parties de monomères.

Les doses d'accélérateur du type amine sont de 0,1 à 2 parties pour 100 parties de monomères.

Lorsqu'on utilise un accélérateur du type sel métallique, la dose varie de 0,02 à 2 parties pour 100 parties de monomères, les doses les plus élevées étant utilisées pour les composés métalliques qui migrent difficilement dans l'épaisseur de la feuille.

Les adjuvants de polymérisation peuvent être introduits à raison de $10^{-4}$ à 10 parties pour 100 parties de monomères.

Lorsque les deux composants sont sous forme de feuilles, le monomère doit migrer du premier composant au second composant pour que le réseau tridimensionnel se forme dans toute l'épaisseur du joint collé, et il semble que ce monomère serve de support pour la migration du catalyseur. Le monomère doit donc avoir une mobilité suffisante pour traverser la feuille du second composant avant que la polymérisation soit trop avancée. Cette mobilité doit donc être d'au tant plus grande que le système catalyseur et accélérateur est plus actif. Dans le cas d'une catalyse lente, correspondant à un durcissement en plus de 24 heures à température ambiante, le monomère doit être constitué pour au moins 50% de molécules dont le poids moléculaire est inférieur à 1000.

Cette condition n'est pas nécessaire lorsqu'un catalyseur et un accélérateur sont présents dans chacun des composants, ou lorsque l'un des composants est sous forme de solutiion.

Pour la suite de la description, on se référera aux dessins annexés, dans lesquels :
- la figure 1 est une vue partielle en perspective montrant une première phase de la réalisation d'un collage au moyen d'un adhésif selon l'invention;
- la figure 2 est une vue en élévation relative à une seconde phase du collage;
- la figure 3 est une vue en perspective d'une éprouvette d'essai pour un adhésif selon l'invention.

Comme indiqué plus haut, pour préparer un composant sous forme de feuille mince d'un adhésif selon l'invention, on dissout dans un solvant approprié les constituants de ce composant, on étale la solution sur un support anti-adhérent et on fait évaporer le solvant pour obtenir une feuille mince. Le support utilisé pour l'étalement de la solution peut servir de film protecteur pour le stockage de la feuille adhésive sensible à la pression.

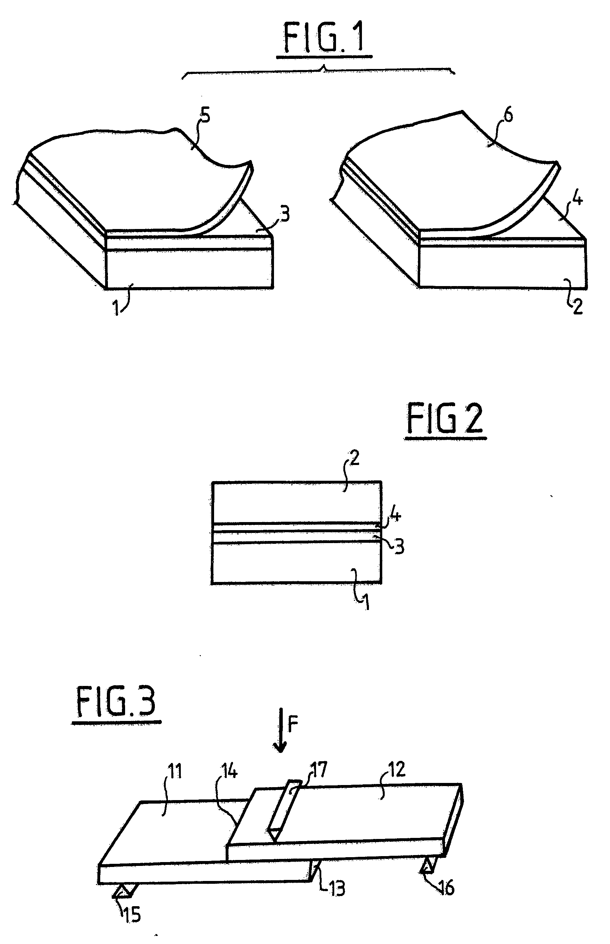

Les figures 1 et 2 illustrent la mise en oeuvre d'un adhésif à deux composants sous forme de feuilles pour l'assemblage par collage de deux pièces 1 et 2.

Les deux composants de l'adhésif sont sous forme de rubans minces 3 et 4 de même largeur que les pièces 1 et 2, et protégés par des supports anti-adhérents respectivement 5 et 6.

Comme montré à la figure 1, le ruban 3 contenant le monomère est appliqué sur la face à coller de la pièce 1, la face du ruban opposée à la pièce étant recouverte de sa pellicule protectrice 5. On presse le ruban 3 par l'intermédiaire de la pellicule 5 pour obtenir une adhésion immédiate sur la pièce grâce aux propriétés auto-adhésives du ruban. De la même façon on applique la bande 4 ne contenant pas de monomères sur la face à coller de la pièce 2. Cette application est aisée, précise et propre. Elle peut être effectuée par des machines simples ou des robots en des cycles d'opérations automatiques. On détache ensuite les pellicules protectrices 5 et 6 pour exposer les surfaces libres des rubans 3 et 4, et on superpose les deux sous-ensembles en appliquant l'une contre l'autre ces surfaces libres, réalisant un empilement composé, dans l'ordre, de la pièce 1, du ruban 3, du ruban 4 et de la pièce 2. On presse cet empilement de façon que les deux feuilles adhèrent l'une à l'autre comme elles adhèrent respectivement aux deux pièces. La polymérisation se produit alors et conduit, comme exposé plus haut, à une réticulation dans toute l'épaisseur du joint formé par les deux rubans et à un collage définitif des deux pièces.

Les matrices polymères des rubans contribuent à la souplesse du joint réticulé.

La figure 3 illustre en perspective une éprouvette utilisée pour tester les adhésifs décrits dans les exemples ci-après.

Cette éprouvette comprend deux plaques d'acier dégraissé 11 et 12 ayant pour dimensions 100 x 30 x 6 mm.

Pour essayer un adhésif en deux composants sous forme de feuilles minces, on applique l'un des composants sur l'une des faces de la plaque 11 et l'autre sur l'une des faces de la plaque 12, la plaque 11 étant recouverte sur toute sa largeur et sur une longueur d'au moins 34 mm à partir de l'une de ses extrémités 13 et la plaque 12 étant recouverte sur toute sa largeur et sur une longueur au moins égale à 34 mm à partir de l'une de ses extrémités 14. On applique ensuite l'une contre l'autre, sur une longueur de 33 mm, les faces ainsi revêtues, les chants latéraux des deux plaques étant coplanaires et les parties non revêtues s'étendant dans des sens opposés à partir des parties revêtues. L'application s'effectue sous une force de serrage de 4,1 daN maintenue pendant un temps déterminé à une température déterminée. On obtient ainsi après polymérisation un joint de colle d'une surface de 10 cm².

Pour déterminer la solidité du collage, on fait reposer les deux plaques respectivement sur deux couteaux 15 et 16 dont les arêtes de contact, orientées selon la largeur des plaques, sont distantes l'une de l'autre de 155 mm et situées à égale distance des surfaces en regard des deux plaques. On exerce sur celles-ci un effort de flexion dans la direction de la flèche F1, perpendiculaire aux faces des plaques 11 et 12, par l'intermédiaire d'un couteau 17 dont l'arête de contact est également orientée selon la largeur des plaques et est à égale distance de celle des couteaux 15 et 16. Le sens de cette force est tel qu'elle tend à appuyer les plaques contre les couteaux 15 et 16. On fait avancer le couteau 17 à une vitesse de 1 mm/mn et on mesure la force correspondante au décollage des deux plaques, cette force étant fonction croissante de la solidité du collage. Cet essai est réalisé à une température de 23°C et une humidité relative de 50%.

Dans les exemples ci-après, le premier composant de l'adhésif, qui contient au moins un monomère polymérisable et est sous forme de feuille mince, est désigné par la lettre A suivie d'un chiffre. Le second composant, qui peut contenir ou non un monomère, est désigné par la lettre B lorsqu'il est sous forme de feuille mince, ou par la lettre S lors qu'il est sous forme de solution, suivie d'un chiffre.

Exemples 1 à 3.

On réalise des feuilles ayant les compositions indiquées dans le tableau I.

### TABLEAU I

|  | A1 | A2 | A3 | B1 | B2 |
|---|---|---|---|---|---|
| Polymère souple (Hycar 1072 CG) | 40 | 40 | 40 | – | – |
| Polymère acrylique auto-adhésif (Durotak 2287) (matière sèche) | – | – | – | 10 | 10 |
| TEGDM | 45 | 35 | 25 | – | – |
| Résine collante (Dertolyn DEG) | 5 | 5 | 5 | – | – |
| NN'diméthyl paratoluidine | 0,5 | 0,5 | 0,5 | – | – |
| Peroxyde de benzoyle | – | – | – | 4 | – |
| Peroxyde de dichlorobenzoyle | – | – | – | – | 6 |
| Phtalate de butylbenzyle | – | – | – | 6 | 6 |
| Poids de la feuille au m2 | 50g | 50g | 50g | 10g | 10g |

Les feuilles A sont obtenues à partir de solutions des constituants dans un solvant polaire tel que la méthyléthylcétone ou l'acétate d'éthyle. Pour les feuilles B, le Durotak 2287 est livré en solution dans l'acétate d'éthyle, et il suffit d'ajouter le catalyseur et le plastifiant à cette solution.

Exemple 1 :

L'adhésif formé par les composants A1 et B1 est testé selon le mode opératoire décrit ci-dessus en relation avec la figure 3. On obtient des résistances de 50, 75 et 80 daN respectivement après des séjours de 2 heures, 4 heures et 12 heures à l'étuve à 60°C.

Exemple 2 :

On essaie les adhésifs A1-B1, A2-B1 et A3-B1 après un séjour de 4 heures à l'étuve à 60°C. Les résistances d'assemblage sont respectivement de 75, 53 et 10 daN.

Exemple 3 :

On réalise des éprouvettes collées au moyen des feuilles A1 et B2, qu'on fait séjourner à trois températures différentes pendant des temps différents. Les résultats sont les suivants :
29, 56 et 75 daN respectivement après un jour, deux jours et trois jours à 23°C;
53, 73, 90 et 98 daN respectivement après trois heures, quatre heures, six heures et vingt-quatre heures à 60°C;
33, 43, 90 et plus de 100 daN respectivement après 15 minutes, 30 minutes, 1 heure et 24 heures à 80°C.

Exemple 4 :

On prépare des feuilles ayant les compositions indiquées dans le tableau II.

## TABLEAU II

|  | A4 | B3 |
|---|---|---|
| Polymère souple (Hycar 1072 CG) | 40 | - |
| Polymère acrylique auto-adhésif (Durotak 2287) (matière sèche) | - | 10 |
| TEGDM | 45 | - |
| Résine collante (Dertolyn DEG) | 5 | - |
| Accélérateur au vanadium | 0.5 | - |
| Phtalate de butylbenzyle | - | 6 |
| Hydroperoxyde de cumène | - | 6 |
| Poids de la feuille au m2 | 50g | 10g |

L'accélérateur au vanadium, commercialisé par Akzo Chemie sous la référence VN2, est à base d'un sel organique de vanadium et contient 0,2% de vanadium métal.

Les éprouvettes collées à l'aide des feuilles A4 et B3 présentent une résistance de 10, 33, 43 et 63 daN respectivement après trois heures, quatre heures, cinq heures et six heures de séjour à l'étuve à 60°C.

Exemple 5

On réalise des assemblages à l'aide des feuilles A5 et B4 dont la composition est donnée dans le tableau III.

## TABLEAU III

| | A5 | B4 | B5 | B6 |
|---|---|---|---|---|
| Polymère souple (Hycar 1072 CG) | 40 | – | – | – |
| Polymère acrylique auto-adhésif (Solucryl 300) (matière sèche) | – | 10 | 10 | – |
| Polymère acrylique auto-adhésif (Durotak 2287) (matière sèche) | – | – | – | 10 |
| TEGDM | 45 | – | – | – |
| Résine collante (Dertolyn DEG) | 5 | – | 0.3 | 0.3 |
| Hydroperoxyde de cumène | 3 | – | – | – |
| NN' paratoluidine | 0.5 | – | – | – |
| Accélérateur au vanadium VN2 | – | 3 | 1 | – |
| Thiourée | | – | 0.3 | 0.3 |
| αα'dipyridyle | – | – | 0.4 | 0.4 |
| Naphténate de Cobalt | – | – | – | 0.02 |
| Acétate de Cobalt | – | – | – | 0.004 |
| Phtalate de dioctyle | – | – | 1.5 | 1.5 |
| Poids de la feuille au m2 | 50g | 10 g | 10 g | 10 g |

On obtient des résistances de 30, 87 et 107 daN respectivement après une heure, quatre heures et deux jours à 23°C.

Exemple 6

On réalise des assemblages à l'aide des feuilles A5 et B5.
On obtient des résistances de 78, 85 et 90 daN après une heure, quatre heures et 24 heures à 23°C.

Exemple 7

Pour des assemblages réalisés à l'aide des feuilles A5 et B6, les résistances obtenues sont de 27, 45, 70 et 70 daN respectivement après une heure, deux heures, quatre heures et vingt-quatre heures à 23°C.

Exemple 8

Dans cet exemple on fait appel à des "compositions croisées" dans lesquelles chaque composant contient un monomère, un catalyseur et un accélérateur, chaque accélérateur étant actif seulement en combinaison avec l'accélérateur contenu dans l'autre composant. Les compositions sont données dans le tableau IV.

0 300 847

## TABLEAU IV

|  | A6 | B6 |
|---|---|---|
| Polymère souple (Hycar 1072 CG) | 40 | 40 |
| TEGDM | 45 | 45 |
| Résine collante (Dertolyn DEG) | 5 | 5 |
| NN' paratoluidine | 0.5 | – |
| Hydroperoxyde de cumène | 1.5 | – |
| Peroxyde de dichlorobenzoyle | – | 1.5 |
| Accélérateur au vanadium VN2 | – | 0.5 |
| Poids de la feuille au m2 | 40g | 40 g |

Cet adhésif fournit des assemblages dont la résistance est de 30, 65, 95 et 110 daN respectivement après quatre heures, huit heures, seize heures et deux jours de séjour à 40°C.

<u>Exemple 9</u>

Cet exemple illustre des adhésifs comportant un premier composant sous forme de feuille et un second composant sous forme de solution dans un solvant volatil.
Les solutions préparées ont les compositions indiquées dans le tableau V.

8

TABLEAU V

| | S1 | S2 | S3 | S4 | S5 |
|---|---|---|---|---|---|
| TEGDM | 45 | 100 | 100 | - | - |
| Acrylate d'éthyle | 45 | - | - | - | - |
| Polymère acrylique auto-adhésif (Durotak 2287) (matière sèche) | - | - | - | - | 3 |
| Résine collante (Dertolyn DEG) | - | - | - | - | 1 |
| Trichloréthane | - | - | - | 92 | 91 |
| Accélérateur au vanadium VN2 | 10 | 10 | 1 | 5 | 5 |
| Diméthylaniline | - | - | - | 3 | - |
| Antioxydant (NNC 10 d'Akzo Chemie) | - | 1 | 1 | - | - |

Dans les composants S1, S2 et S3, les monomères sont liquides et servent en même temps de solvant pour la solution.

Le mode opératoire d'essai est le même que pour les exemples précédents, l'une des plaques étant enduite de la solution, à l'aide de coton hydrophile, au lieu d'être revêtue d'une feuille sensible à la pression.

Ces solutions ont été testées en combinaison avec les feuilles A5 et A6, et on a obtenu les résistances en daN données dans le tableau VI après différents temps de séjour à 23°C.

TABLEAU VI

| Couple utilisé | A6+S1 | A6+S2 | A6+S3 | A5+S4 | A5+S5 |
|---|---|---|---|---|---|
| 0 heure 30 | 50 | 50 | 0 | 32 | 1 |
| 1 heure | 64 | 75 | 5 | 48 | 1 |
| 2 heures | 50 | 85 | - | - | 15 |
| 4 heures | 75 | 80 | 60 | 70 | 16 |
| 24 heures | 75 | 100 | 70 | - | 50 |
| 4 jours | - | 130 | 100 | - | - |

Comme décrit plus haut, pour effectuer un assemblage au moyen d'un adhésif selon l'invention, on réalise un empilement comprenant en général une seule couche de chacun des deux composants. Cependant, dans certains cas, il peut être utile de mettre en oeuvre plus de deux couches selon un empilement alterné, chaque couche de l'un des composants, à l'exception des deux couches extrêmes, étant comprise entre deux couches de l'autre composant. Une telle disposition est utile par exemple si on veut réaliser un joint relativement épais pour compenser des inégalités de surface des pièces à assembler, l'épaisseur de chaque feuille étant limitée, comme indiqué plus haut, pour permettre la migration des constituants.

**0 300 847**

**Revendications**

1. Adhésif à deux composants, un premier composant contenant au moins un monomère ou un prépolymère et l'autre composant contenant un réactif qui, lors de la mise en contact des deux composants, réagit avec le monomère ou le prépolymère pour former un polymère réticulé ayant des propriétés adhésives, caractérisé en ce que l'un au moins des deux composants est sous forme d'une feuille mince adhésive sensible à la pression.

2. Adhésif selon la revendication 1, caractérisé en ce que la feuille mince est un ruban.

3. Adhésif selon l'une des revendications 1 et 2, caractérisé en ce que la feuille mince comprend une matrice à base d'un polymère souple dans laquelle est dispersé au moins un monomère ou un réactif de polymérisation.

4. Adhésif selon la revendication 3, caractérisé en ce que le polymère souple est un adhésif sensible à la pression.

5. Adhésif selon la revendication 3, caractérisé en ce que le polymère souple est additionné d'une résine collante.

6. Adhésif selon l'une des revendications précédentes, caractérisé en ce que le monomère est un composé insaturé choisi parmi les monomères acryliques, méthacryliques, vinyliques et diéniques conjugués.

7. Adhésif selon l'une des revendications précédentes, caractérisé en ce que le réactif comprend un catalyseur du type peroxyde ou hydroperoxyde.

8. Adhésif selon l'une des revendications précédentes, caractérisé en ce que l'un des composants contient un accélérateur de type amine et l'autre un catalyseur de type peroxyde.

9. Adhésif selon l'une des revendications 1 à 7, caractérisé en ce que l'un des composants contient un accélérateur de type sel métallique et l'autre un catalyseur du type hydroperoxyde.

10. Adhésif selon l'une des revendications 1 à 7, caractérisé en ce que le premier composant contient un catalyseur de type hydroperoxyde et un accélérateur du type amine et le second un catalyseur du type peroxyde et un accélérateur du type sel métallique.

11. Adhésif selon l'une des revendications 1 à 7, caractérisé en ce que le premier composant ne contient pas de réactif de polymérisation et que le second composant contient un accélérateur du type amine.

12. Adhésif selon l'une des revendications précédentes, caractérisé en ce que l'un au moins des composants contient des additifs tels que charges et plastifiants.

13. Adhésif selon l'une des revendications précédentes, caractérisé en ce que les deux composants sont sous forme de feuilles minces, notamment de rubans.

14. Adhésif selon l'une des revendications 1 à 12, caractérisé en ce que l'un des composants est sous forme de solution.

15. Adhésif d'assemblage par collage de deux éléments, caractérisé en ce qu'on réalise un empilement comprenant les deux éléments et, interposées entre ceux-ci, au moins une couche de chacun des deux composants d'un adhésif selon l'une des revendications précédentes.

16. Procédé selon la revendication 15, caractérisé en ce qu'on dispose une couche de l'un des composants sur l'un des éléments à assembler et une couche de l'autre composant sur l'autre élément, et qu'on assemble les éléments ainsi revêtus de façon que les deux couches viennent l'une contre l'autre.

17. Procédé selon la revendication 15, caractérisé en ce que l'empilement comprend des couches alternées des deux composants en feuilles ou rubans.

10

0300847

## FIG.1

## FIG 2

## FIG.3

Office européen des brevets

**RAPPORT DE RECHERCHE EUROPEENNE**

Numero de la demande

EP 88 40 1559

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 433 563 (BOSTIK)<br>* Revendications 1,3,6,8; page 7, lignes 8-17 *<br>--- | 1,2,6 | C 09 J 3/14<br>C 09 J 7/00<br>C 09 J 5/00 |
| A | GB-A-2 078 763 (TAKIRON)<br>* Revendications *<br>--- | 1,2,6 | |
| A | FR-A-1 415 073 (JEDLICKA)<br>* Résumé *<br>--- | 1,2,13,15 | |
| A | FR-A-1 057 663 (BRITISH RESIN PRODUCTS)<br>* Résumé *<br>--- | 1 | |
| A | US-A-3 907 623 (ROSTYSLAW DOWBENKO)<br>* Revendication 1; figure *<br>--- | 1 | |
| A | US-A-4 358 329 (E. MASUDA)<br>* Résumé *<br>----- | 1 | |

**DOMAINES TECHNIQUES RECHERCHES (Int. Cl.4)**

C 09 J 5/00

Le présent rapport a été établi pour toutes les revendications

| Lieu de la recherche | Date d'achèvement de la recherche | Examinateur |
|---|---|---|
| LA HAYE | 14-10-1988 | GIRARD Y.A. |